# EUROPEAN PATENT SPECIFICATION

(11) **EP 1 092 893 B1**
(45) Date of publication and mention of the grant of the patent: **05.11.2003**
(21) Application number: 00304316.3
(22) Date of filing: 22.05.2000
(51) Int. Cl.: F16H 21/32, B64C 13/04

(54) **Motor linkage mechanism**
Motorangetriebenes Gestänge
Timonerie motorisée

(30) Priority: 06.10.1999 GB 9923469
(43) Date of publication of application: 18.04.2001
(73) Proprietor: BAE Systems Electronics Ltd., Stanmore, Middlesex HA7 4LY (GB)
(72) Inventor: Corney, John Michael, Bredhurst, Kent ME7 3LB (GB)
(74) Representative: Fletcher Watts, Susan J.

(56) References cited:
- CH-A- 162 226
- US-A- 1 964 900
- US-A- 4 150 803
- US-A- 4 649 484
- TAWCHELIDSE & OSSIPOWA: "Verwendung von Koppelkurvenförmiger Viergelenkgetriebe" MASCHINENBAUTECHNIK, vol. 24, no. 5, 1975, pages 224-226, XP002161067

## Description

The present invention relates to an articulated linkage mechanism for coupling a load to a motor.

US-A-1964900 discloses a mechanical movement made up of a series of links pivoted to one another by more than three pivots. One link is moved by drive means. A driven element is pivotally connected by connecting means to a point on the link moved by the drive means, and the connecting means has a length substantially equal to the radius of curvature of a portion of a locus described by a point on the link moved by the drive means, to produce interposed periods of standstill. There is no concept of use for an aircraft active stick controller.

Typically a motor can be directly coupled to a load that is able to rotate directly in response to torque generated by the motor. Alternatively, the motor can be linked to the load using a simple crank and link arrangement, such that the motor and load are not required to be in close proximity to one another and other mechanisms and sensors can be installed between the motor and load within the crank and link arrangement. Another benefit of the crank and link arrangement is that some mechanical advantage can be gained between the motor and the load by providing a short crank attached to the motor and a longer link between the load and the crank. However, a disadvantage of the simple crank and link arrangement is that it is only able to operate over a limited angle of rotation, for example up to ±60°. That is the angle of rotation of the motor or the load can never reach ±90°. This is in contrast with a directly coupled motor and load which are able to rotate continuously, that is the motor or load can rotate through ±360°.

Therefore, in order to provide an improved mechanical advantage than can be achieved by a directly coupled arrangement, whilst still allowing continuous rotation of the motor and load, it is normal to provide an appropriate gear train system between the motor and load. However, in safety critical applications, for example in an aerospace application, the use of a gear train system is unacceptable as it can result in jamming or physical malfunction of the gear train itself. Therefore, although a gear train system may be the most appropriate means of coupling a motor to a load, its use can be prohibited due to safety considerations.

According to the invention there is provided an articulated linkage mechanism forming part of an active stick controller in an aircraft cockpit, characterised by comprising a motor having a drive shaft and arranged to produce a torque force on the drive shaft, a crank attached to the drive shaft at a first mounting position, a link pivotally attached to a first mounting position to a second mounting position of the crank and at a second mounting position attachable to a load, the link having an intermediate pivot mounting position between its first and second mounting positions, and an arm pivotally attached at a first mounting position to the intermediate pivot mounting position and pivotally attached at a second mounting to an anchorage position fixed relative to the first mounting position of the crank.

In this manner, a motor can be coupled to a load without the use of a gear train system and the linkage mechanism has an improved mechanical advantage over that provided by a conventional crank and link arrangement or direct coupling arrangement between the motor and load. Furthermore, the linkage mechanism can provide a greater angle of rotation than that achievable by a crank and link arrangement, that is the motor can produce an angle of rotation greater than ±270°.

The link may be constituted by first and second limbs either side of the intermediate pivot mounting position and the first and second limbs may be disposed angularly with respect to one another.

The dimensions of the crank, the link, the arm and the respective mounting positions of the crank, the link and the arm may be arranged such that the second mounting position of the link is attachable to the load describes a substantially straight line during movement of the drive shaft of the motor.

In this manner, the second mounting position of the link describes a substantially straight line such than an attached load to the second mounting position also moves in a substantially straight line when the second mounting position is caused to travel between two predetermined limits of the articulated linkage mechanism by the rotation of the drive shaft of the motor.

Preferably, the motor may be a torque motor.

The invention will now be described, by way of example only, with reference to the accompanying drawings, in which:
Figure 1 illustrates a linkage mechanism in side elevation according to the present invention;
Figure 2 illustrates a first position of the linkage mechanism shown in Figure 1;
Figure 3 illustrates a second position of the linkage mechanism shown in Figure 1;
Figure 4 illustrates a third position of the linkage mechanism shown in Figure 1, and
Figure 5 illustrates the first, second and third positions shown in Figures 2 to 4 overlaid on one another.

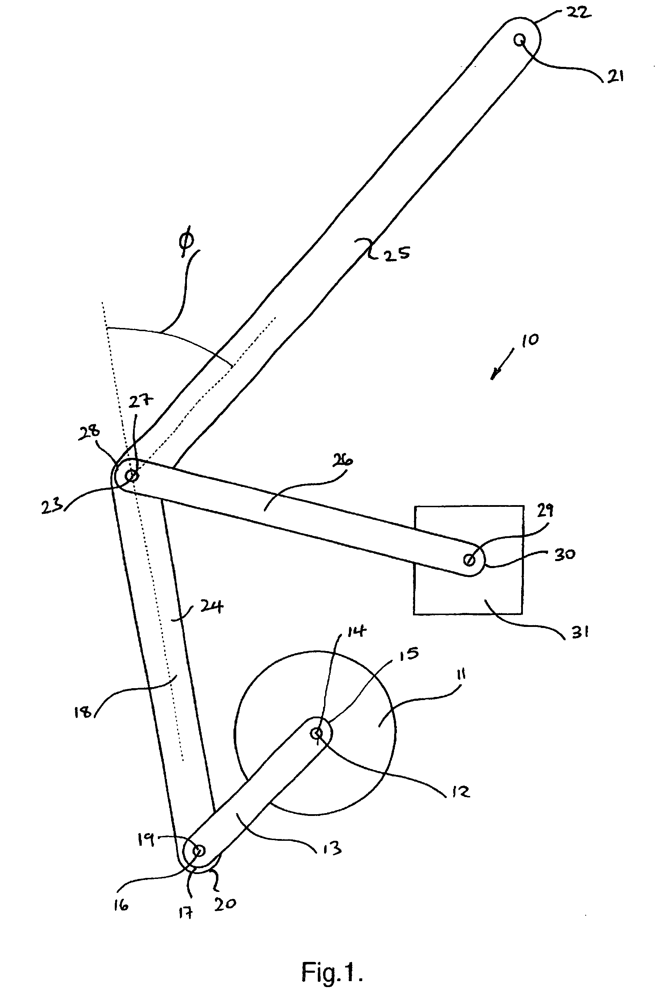

Referring to Figure 1, an articulated linkage mechanism 10 comprises a motor 11 arranged to produce a torque force, on its drive shaft 12. The motor 11 can be a torque motor which is arranged to achieve a high level of torque, particularly when its drive shaft 12 is stationary.

A crank 13 is mounted to the drive shaft 12 at a first mounting position 14 located at a first end 15 of the crank 13. There is provided a second mounting position 16 at a second end 17 arranged remotely to the first end 15. A link 18 is pivotally attached at a first mounting position 19 located at a first end 20 of the link 18 to the second mounting position 16 of the crank 13. There is provided a second mounting position 21 on the link 18 at a second end 22 arranged remotely to the first end 20. A load, not illustrated, is attached to the link 18 via the second mounting position 21 of the link 18.

The link 18 is arranged to have an intermediate pivot mounting position 23 located between the first and second mounting positions 19 and 21. The link 18 is constituted by a first limb 24 and a second limb 25 arranged either side of the intermediate pivot mounting position 23. The first and second limbs 24 and 25 are disposed angularly with respect to one another by an angle φ. The first limb 24 carries the first mounting position 19 and the second limb 25 carries the second mounting position 21.

An arm 26 is pivotally attached at a first mounting position 27, located at a first end 28 of the arm 26, to the intermediate pivot mounting position 23 and is pivotally attached at a second mounting position 29, located at a second end 30 remote 30 the first end 28, to a fixed anchorage position 31. It will be understood that the motor 11 is fixed and that the second mounting position 29 of the arm 26 is fixed with respect to the first mounting position 14 of the crank 13.

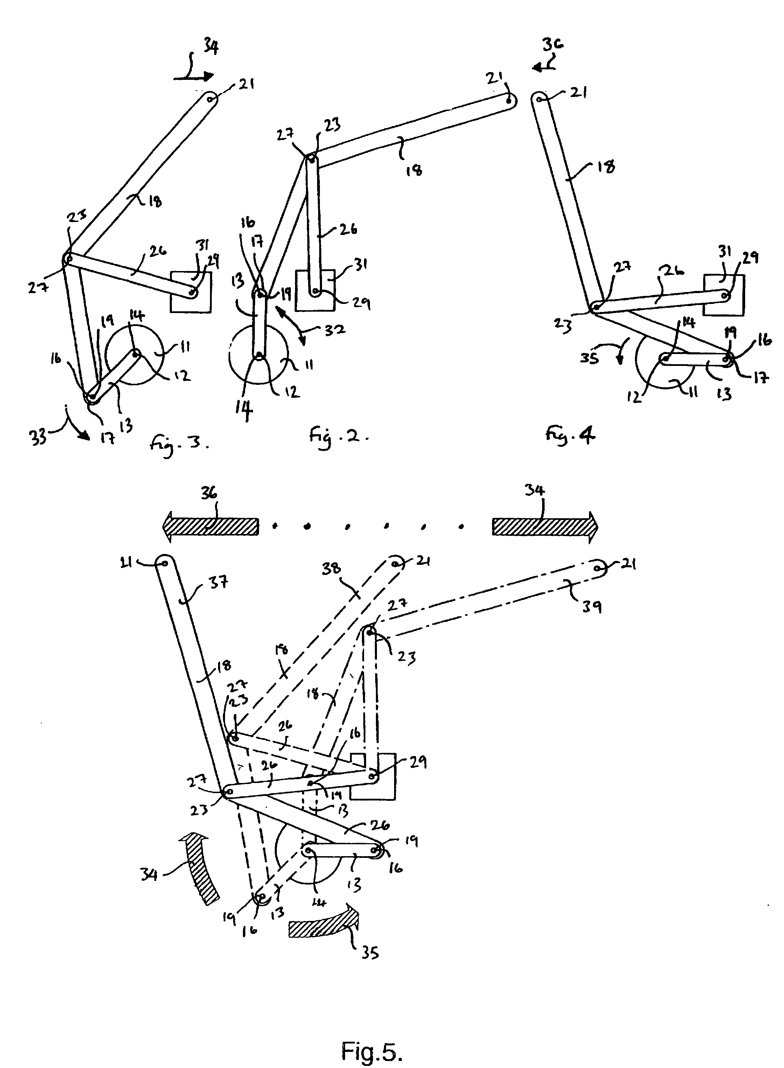

Referring to Figures 2 to 4, in which like references have been used to indicate similar integers to those illustrated in Figure 1, in operation, the motor 11 generates a torque force at its drive shaft 12 that controls the angular position of the crank 13 attached to the drive shaft at the first mounting position 14 of the crank 13. The second end 17 of the crank 13 describes a circular movement about the first mounting position 14 which in turn causes the link 18, attached to the second mounting position 16 of the crank 13 by its first mounting position 19, to swivel.

The movement of link 18 is constrained by the arm 26 attached between the intermediate pivot mounting position 23 and the fixed anchorage position 31, respectively the first mounting position 27 and second mounting position 29 of the arm 26.

As the drive shaft 12 rotates, the crank 13 rotates and causes the link 18 to move in a manner which is constrained by the positions of the crank 13 and the arm 26. The various positions of the link 18 are illustrated in Figures 2 to 4 for various angular displacements of the crank 13 caused by either clockwise or anticlockwise rotation, indicated by double headed arrow 32 of the drive shaft 12. It also follows that the position of the load attached to the second mounting position of the 21 of the link 18 is also determined by the position of the crank 13.

Figure 2 illustrates the mechanism 10 in a mid-position, that is the crank 13 can be rotated either clockwise or anticlockwise, indicated by double headed arrow 32. Referring to Figure 3, if the crank 13 is rotated anticlockwise, as indicated by arrow 33, then the second mounting position 21 of the link 18 will move backwardly, as indicated by arrow 34, that is from the left to the right of Figure 3, to a backward position. Referring to Figure 4, if the crank 13 is rotated clockwise, as indicated by arrow 35, then the second mounting position 21 of the link 18 will move forwardly, as indicated by arrow 36, that is from the right to the left of Figure 4, to a forward position.

As can be determined from Figures 3 and 4, the crank 13 is able to rotate through a range of angles greater than ±270°. This angular movement represents a substantial improvement in terms of that achievable using a crank and link arrangement according to the prior art. The improvement in angular movement also provides a greater mechanical advantage between the motor and load.

In Figure 5, wherein like references have been used to indicate similar integers to those illustrated in Figures 1 to 4, there is illustrated a forward position 37, in solid line, a mid-position 38, in dotted line and a backward position 39, in chained line. It should also be noted that the spatial location of the second mounting position 21, and hence the load, not illustrated, attached thereto, moves approximately horizontally during angular rotation, indicated by arrows 34 and 35, of the crank 13, that is rotational movement between the forward position 37 and the backward position 39. However, this feature is dependent on the choice of the relative dimensions of the crank 13, the link 18 and the arm 26 and also the respective spacing of the mounting positions 14 and 16 of the crank 13, the mounting positions 19, 21 and 23 of the link 18, whose position in turn determines the angle φ between the two limbs 24, 25 of the link 18, and the mounting positions 27 and 29 of the arm 26.

A mechanism 10, as described, can be used as part of an active stick controller for use in an aircraft. Whereas, conventional aircraft utilise one or more control sticks with mechanical linkages to operate various control surfaces of the aircraft, in a fly by wire aircraft the mechanical linkages are implemented electronically using wire connections and actuators. An active stick controller not only provides a suitable electrical interface with the wire connections of a fly by wire aircraft, it also embodies a means of controlling the force and position characteristics using the motor 11 of the mechanism 10. That is force, generated by the motor 11, can be used to provide a user with feedback.

When the mechanism 10 is to be used as an active stick controller then the user, usually the pilot, will apply a load at the second mounting position 21 of the link 18. This load is sensed by one or more force sensors, not illustrate, installed at appropriate positions between a stick, attached to the link 18 at mounting position 21, and the link 18. The motor 11 is controlled in such a manner to position the link 18 between the forward and backward positions 37, 39, indicated in Figures 4 and 3 respectively, to provide the desired force feel characteristic thereby providing the pilot with a feeling of the movement of the aircraft.

It will be noted that proper control of the force feel characteristic of the active stick controller via the motor 10, according to one or more sensors monitoring the motion of the aircraft, will provide the pilot with feedback via the stick which will feel substantially the same as that provided by a conventional stick.

Although the invention has been described and is part of an active stick controller, it will be understood that such an active stick controller can also be utilised in a space craft. It will be understood that the incorporation of the invention allows a high level of integrity to be achieved by removal of the need for a geartrain system.

## Claims

1. An articulated linkage mechanism, forming part of an active stick controller in an aircraft cockpit, comprising
a motor (11) having a drive shaft (12) and arranged to produce a torque force on the drive shaft (12),
a crank (13) attached to the drive shaft (12) at a first mounting position (14),
a link (18) pivotally attached at a first mounting position (19) to a second mounting position (16) of the crank (13) and at a second mounting position (21) attachable to a load, the link (18) having an intermediate pivot mounting position (23) between its first and second mounting positions (19, 21) and
an arm (26) pivotally attached at a first mounting position (27) to the intermediate pivot mounting position (23) and pivotally attached at a second mounting position (29) to an anchorage position (31) fixed relative to the first mounting position (14) of the crank (13).

2. An articulated linkage mechanism, according to Claim 1, wherein the link (18) is constituted by first and second limbs (24, 25) either side of the intermediate pivot mounting position (23) and the first and second limbs (24, 25) are disposed angularly with respect to one another.

3. An articulated linkage mechanism, according to Claim 1 or Claim 2, wherein the dimensions of the crank (13), the link (18) the arm (26) and the respective mounting positions of the crank (13), the link (18) and the arm (26) are arranged such that the second mounting position (16) of the link (18) that is attachable to the load describes a substantially straight line during movement of the drive shaft (12) of the motor (11).

4. An articulated linkage mechanism, according to any one of Claims 1 to 3, wherein the motor (11) is a torque motor.

## Patentansprüche

1. Gelenkgetriebe, das einen Teil einer aktiven Knüppelsteuerung im Cockpit eines Flugzeuges bildet, mit den folgenden Merkmalen:
- ein Motor (11) mit einer Antriebswelle (12) erzeugt ein Drehmoment für die Antriebswelle;
- eine Kurbel (13) ist an einer ersten Lagerstelle (14) an der Antriebswelle (12) befestigt;
- ein Lenker (18) ist schwenkbar mit einer ersten Lagerstelle (19) an einer zweiten Lagerstelle (16) der Kurbel (13) angelenkt und er ist mit einer zweiten Lagerstelle (21) an einer Last befestigt, wobei der Lenker (18) eine zwischen der ersten Lagerstelle (19) und der zweiten Lagerstelle (21) befindliche Zwischen-Schwenklagerstelle (23) aufweist;
- ein Arm (26) ist schwenkbar an einer ersten Lagerstelle (27) der Zwischen-Schwenklagerstelle (23) angelenkt und er ist schwenkbar mit einer zweiten Lagerstelle (29) an einer Verankerungsstelle (31) angelenkt, die relativ zu der ersten Lagerstelle (14) der Kurbel (13) fixiert ist.

2. Gelenkgetriebe nach Anspruch 1, bei welchem der Lenker (18) einen ersten Schenkel (24) und einen zweiten Schenkel (25) aufweist, die von der Zwischen-Schwenklagerstelle (23) vorstehen, wobei der erste Schenkel (24) gegenüber dem zweiten Schenkel (25) im Winkel angestellt ist.

3. Gelenkgetriebe nach den Ansprüchen 1 oder 2, bei welchem die Dimensionen der Kurbel (13), des Lenkers (18), des Armes (26) und der jeweiligen Lagerstellen von Kurbel (13), Lenker (18) und Arm (26) so angeordnet sind, dass die zweite Lagerstelle (16) des Lenkers (18), die an der Last befestigbar ist, eine im Wesentlichen gerade Linie beschreibt, während sich die Antriebswelle (12) des Motors (11) dreht.

4. Gelenkgetriebe nach einem der Ansprüche 1 bis 3, bei welchem der Motor (11) ein Drehmomentmotor ist.

## Revendications

1. Un mécanisme de liaison articulé, faisant partie d'un manche à balai de commande actif dans un cockpit d'aéronef, comportant
un moteur (11) ayant un arbre d'entraînement (12) et agencé afin de produire une force de couple sur l'arbre d'entraînement (12),
une manivelle (13) attachée à l'arbre d'entraînement (12) à l'endroit d'une première position de montage (14),
une bielle (18) attachée de façon pivotante à une deuxième position de montage (16) de la manivelle (13) à l'endroit d'une première position de montage (19) et pouvant être attachée de façon pivotante à une charge à l'endroit d'une deuxième position de montage (21), la bielle (18) ayant une position de montage pivot intermédiaire (23) entre ses première et deuxième positions de montage (19, 21) et
un bras (26) attaché de façon pivotante à la position de montage pivot intermédiaire (23) à l'endroit d'une première position de montage (27) et attaché de façon pivotante à une position d'ancrage (31) fixe relativement à la première position de montage (14) de la manivelle (13) à l'endroit d'une deuxième position de montage (29).

2. Un mécanisme de liaison articulé, selon la revendication 1, dans lequel la bielle (18) est constituée par des première et deuxième branches (24, 25) des deux côtés de la position de montage pivot intermédiaire (23) et les première et deuxième branches (24, 25) sont disposées angulairement l'une par rapport à l'autre.

3. Un mécanisme de liaison articulé, selon la revendication 1 ou la revendication 2, dans lequel les dimensions de la manivelle (13), de la bielle (18) et du bras (26) et les positions de montage respectives de la manivelle (13), de la bielle (18) et du bras (26) sont agencées de telle sorte que la deuxième position de montage (16) de la bielle (18) qui peut être attachée à la charge décrive une ligne substantiellement droite durant le déplacement de l'arbre d'entraînement (12) du moteur (11).

4. Un mécanisme de liaison articulé, selon n'importe laquelle des revendications 1 à 3, dans lequel le moteur (11) est un moteur couple.
